# DEMANDE DE BREVET EUROPEEN

(11) **EP 1 574 935 A1**
(43) Date de publication de la demande: **14.09.2005**
(21) Numéro de dépôt: 04100963.0
(22) Date de dépôt: 09.03.2004
(51) Int. Cl.: G06F 3/033

(54) **Dispositif électronique de pointage avec gestion optimisée de l'alimentation**

(71) Demandeur: EM Microelectronic-Marin SA, 2074 Marin (CH)
(72) Inventeur: Willemin, Michel, 2523, Lignières (CH); Grandjean, André, 2088, Cressier (CH); Degrauwe, Marc, 2025, Chez-le-Bart (CH); Lauffenburger, James Harold, CO 80919, Colorado Springs (US)
(74) Mandataire: Ravenel, Thierry Gérard Louis

(57) **Abrégé**

L'invention concerne un dispositif électronique de pointage (1) comprenant des moyens de détection de mouvement (2), des moyens de transmission du mouvement (4, 5) détecté à destination d'une unité externe et des moyens d'alimentation électrique (7) pour alimenter les moyens de détection de mouvement et les moyens de transmission. Les moyens d'alimentation électrique comprennent au moins deux cellules électriques d'alimentation (A, B, C) constituant autant de sources d'alimentation électrique (8, 9, 10) indépendantes pouvant être remplacées / rechargées indépendamment les unes des autres.

## Description

### DOMAINE TECHNIQUE

La présente invention concerne de manière générale les dispositifs électroniques de pointage, comme par exemple une souris pour ordinateur, de préférence pour une application sans fil, « cordless » selon la terminologie anglaise. L'invention concerne plus particulièrement l'optimisation des moyens d'alimentation d'un tel dispositif de pointage, ainsi qu'une méthode de gestion de ces moyens d'alimentation et une méthode d'indication de l'état de charge de ces moyens d'alimentation pour avertir l'utilisateur quand il doit en effectuer le remplacement.

### ARRIÈRE-PLAN TECHNOLOGIQUE

Des dispositifs électroniques de pointage, du type souris sans fil pour ordinateur, sont maintenant largement répandus. Ces dispositifs de pointage comprennent classiquement des moyens de détection du mouvement permettant de détecter le mouvement subi par le dispositif, et des moyens de transmission du mouvement détecté à une unité externe, i.e. un ordinateur. Le mouvement transmis à cette unité est généralement utilisé pour déplacer un curseur visible sur des moyens d'affichage de l'unité externe.

Il est courant d'utiliser comme moyens d'alimentation du dispositif de pointage, deux cellules d'alimentation de type AA, ou trois cellules d'alimentation de type AAA. Ces cellules d'alimentation peuvent être connectées en série ce qui permet d'obtenir une tension d'alimentation plus élevée, mais avec une consommation d'énergie importante. Ces cellules, à titre d'alternative, peuvent être connectées en parallèle ce qui permet de réduire la consommation d'énergie, mais avec une tension d'alimentation moindre.

Un des éléments critiques pour de tels dispositifs de pointage sans fil sont justement les moyens d'alimentation, et plus particulièrement leur durée de vie. On entend par durée de vie, le temps pendant lequel une cellule peut délivrer une tension d'alimentation supérieure ou égale à une tension minimum d'alimentation de nécessaire pour assurer un fonctionnement correct le dispositif électronique de pointage. En effet, il est particulièrement contraignant de devoir changer les moyens d'alimentation fréquemment, après quelques semaines d'utilisation, ou même de devoir les recharger régulièrement dans le cas de cellules rechargeables.

Dans le cas d'un arrangement en série des différentes cellules d'alimentation, la consommation d'énergie est importante et par conséquent le durée de vie de ces cellules est en réduite d'autant. Un tel arrangement n'est donc pas optimal pour de tels dispositifs de pointage.

Dans le cas d'un arrangement en parallèle des différentes cellules d'alimentation, quand bien même la durée de fonctionnement du dispositif est prolongée par rapport à un arrangement en série, il est nécessaire d'utiliser des cellules d'alimentation présentant des caractéristiques identiques ou quasi-identiques pour éviter tous problèmes de charge et décharge entre les différentes cellules, ce qui aurait pour effet d'affecter sensiblement le comportement du dispositif de pointage.

Dans les deux cas, il est fortement conseillé, sinon nécessaire, de remplacer / recharger toutes les cellules d'alimentation lorsque l'une d'entre elles est dans un état de faible charge et qu'en conséquence les moyens d'alimentation ne peuvent plus fournir une tension d'alimentation suffisante pour faire fonctionner correctement le dispositif de pointage, ce qui s'avère rapidement contraignant pour l'utilisateur en raison de la fréquence des remplacements, pour des cellules non-rechargeables, ou des rechargements, pour des cellules rechargeables, à effectuer.

### RÉSUMÉ DE L'INVENTION

Un premier objet de la présente invention consiste, d'une part, à assurer une durée prolongée de fonctionnement des cellules d'alimentation du dispositif de pointage, ce même pour des cellules présentant des caractéristiques différentes, et d'autre part, à permettre le remplacement / rechargement de chaque cellule indépendamment du remplacement / rechargement des autres cellules. Ce premier objet est couvert par le dispositif électronique de pointage selon la revendication 1.

Un deuxième objet de la présente invention est d'indiquer à l'utilisateur de manière claire, de préférence sans consommation additionnelle excessive, l'état de charge des différentes cellules d'alimentation et notamment de l'avertir lors de la détection d'un état de faible charge d'une ou plusieurs cellules d'alimentation, en indiquant sans ambiguïté la ou les cellules qui doivent être remplacées / rechargées.

Une solution qui consisterait à faire clignoter une diode électroluminescente indicatrice de la mise sous tension du dispositif de pointage n'est pas souhaitable, en ce que de tels moyens d'indication engendrent non seulement une consommation additionnelle importante qui a pour effet d'accélérer la décharge des cellules d'alimentation, mais également en ce qu'ils ne permettent pas à l'utilisateur de déterminer quelle cellule est à remplacer / recharger.

Ce deuxième objet peut être obtenu avec un dispositif électronique de pointage selon la revendication 5 ou encore avec un système informatique selon la revendication 7.

Un troisième objet de la présente invention concerne une méthode de gestion optimisée de l'alimentation d'un dispositif selon le premier objet, dans le but de prolonger la durée de fonctionnement du dispositif de pointage sans contrainte particulière concernant les caractéristiques des cellules d'alimentation utilisées. Ce troisième objet est obtenu avec la méthode de gestion des cellules d'alimentation selon la revendication 8.

Un quatrième objet de la présente invention concerne une méthode simple et claire d'indication de la ou des cellules présentant un état de faible charge, pour un dispositif de pointage selon le deuxième objet. Ce quatrième objet est couvert par la méthode d'indication de l'état de charge des cellules d'alimentation selon la revendication 10.

### BRÈVE DESCRIPTION DES DESSINS

D'autres caractéristiques et avantages de la présente invention apparaîtront plus clairement à la lecture de la description détaillée qui suit de modes de réalisation de l'invention donnés uniquement à titre d'exemple non limitatif et illustrés par les dessins annexés où :
- la figure 1 représente un dispositif électronique de pointage selon un premier mode de réalisation de l'invention ;
- la figure 2 représente une méthode de gestion de l'alimentation d'un dispositif électronique de pointage selon le premier mode de réalisation de l'invention ;
- la figure 3 représente un dispositif électronique de pointage selon un deuxième mode de réalisation de l'invention ;
- la figure 4 représente une illustration d'un exemple de moyens d'indication de fin de vie des cellules d'alimentation selon l'un quelconque des deux modes de réalisation de l'invention.

### DESCRIPTION DE MODES DE RÉALISATION PRÉFÉRÉS

La description qui va suivre présente à titre d'exemple deux modes de réalisation d'un dispositif électronique de pointage selon l'invention. Ces dispositifs de pointage sont avantageusement utilisés dans une application pour souris d'ordinateur, la souris étant de préférence une souris sans fil.

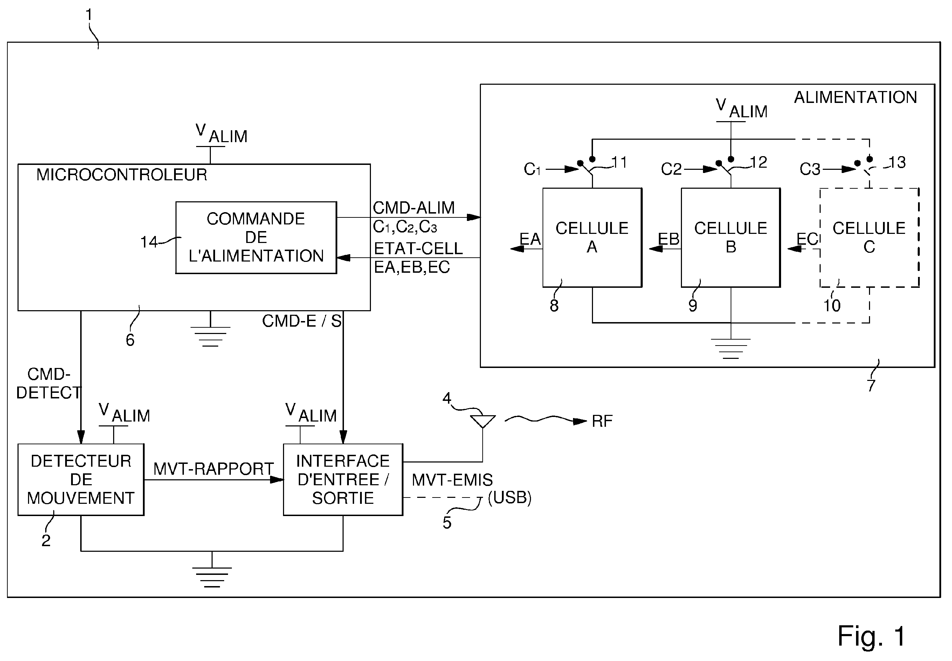

La figure 1 représente un dispositif électronique de pointage selon un premier mode de réalisation préféré de l'invention. Seuls les éléments permettant une meilleure compréhension de l'invention ont été représentés sur cette figure.

Le dispositif électronique de pointage 1 comprend des moyens de détection de mouvement 2. Dans une application pour souris d'ordinateur, les moyens de détection de mouvement 2 du dispositif de pointage 1 détecte le mouvement que lui impose l'utilisateur de la souris. Les moyens de détection de mouvement 2 rapporte le mouvement détecté (MVT_RAPPORT) après analyse à une interface d'entrée/sortie 3 assurant les communications entre le dispositif de pointage 1 et une unité externe.

De préférence, l'interface d'entrée/sortie 3 comprend des moyens de transmission sans fil, du type transmetteur radiofréquence 4. Cependant, à titre de variante, les moyens de transmission peuvent être réalisés au moyen d'une liaison sans fil infra-rouge entre le dispositif de pointage et l'unité externe, ou encore, au moyen d'une connexion filaire 5 par exemple de type USB. Dans l'application pour souris d'ordinateur, l'unité externe correspond à un ordinateur, non représenté, et les informations de mouvement transmises (MVT_EMIS) à l'ordinateur servent alors à déplacer un curseur sur un périphérique d'affichage de l'ordinateur.

Un microcontrôleur 6 permet de commander notamment les moyens de détection de mouvement 2 en définissant les paramètres de détection (CMD_DETECT) qui doivent être utilisés, comme par exemple la fréquence de détection, et les moyens de transmission 4 ou 5, en définissant les paramètres de transmission (CMD_E/S) qui doivent être utilisés, comme par exemple la fréquence de transmission à l'unité externe.

De manière générale et plus particulièrement pour l'application à une souris sans fil, les moyens d'alimentation et plus spécifiquement encore leur durée de vie représente un élément critique du dispositif de pointage. C'est pourquoi, selon le premier mode de réalisation de l'invention, les moyens d'alimentation 7 comprennent au moins deux cellules électriques d'alimentation A, B et C constituant autant de sources d'alimentation électrique 8, 9 et 10. Selon une première variante, les moyens d'alimentation comprennent deux cellules A et B, et selon une deuxième variante, les moyens d'alimentation comprennent trois cellules A, B et C.

Selon la première variante, Les deux cellules A et B sont disposées en parallèle. Chacune des cellules A et B est connectée, d'une part, à un potentiel de référence, i.e. la masse, et, d'autre part, à des moyens de commutation, respectivement représentés par les commutateurs 11 et 12. La position ouverte ou fermée de chacun de ces commutateurs 11 et 12 est commandée au moyen de signaux (CMD_ALIM) respectivement C1 et C2 délivrés par des moyens de commande de l'alimentation 14. Les deux signaux de commande C1 et C2 sont sélectionnés parmi les couples de valeurs suivantes :

| **C1** | **C2** | **Valim** |
|---|---|---|
| ouvert | ouvert | 0 (hors tension) |
| fermé | ouvert | V_{A} |
| ouvert | fermé | V_{B} |

de telle sorte qu'au maximum un seul des deux commutateurs 11 ou 12 est amené en position fermée en même temps, et qu'ainsi la tension d'alimentation (Valim) fournie par les moyens d'alimentation 7 corresponde à la tension d'alimentation (V_{A} ou V_{B}) de la seule cellule dont le commutateur correspondant est en position fermée.

Ainsi, les deux cellules électriques d'alimentation A et B constituent deux sources d'alimentation électrique 8 et 9 indépendantes, fonctionnant à des moments différents et pouvant donc être remplacées / rechargées indépendamment l'une de l'autre.

Selon la deuxième variante, les trois cellules A, B et C sont aussi disposées en parallèle. Chacune des cellules A, B et C est connectée, d'une part, à un potentiel de référence, i.e. la masse, et, d'autre part, à des moyens de commutation, respectivement représentés par les commutateurs 11,12 et 13. La position ouverte ou fermée de chacun de ces commutateurs 11, 12 et 13 est commandée au moyen des signaux (CMD_ALlM) respectivement C1, C2 et C3 délivrés par les moyens de commande de l'alimentation 14. Les trois signaux de commande C1, C2 et C3 sont choisis parmi les triplettes de valeurs suivantes :

| **C1** | **C2** | **C3** | **Valim** |
|---|---|---|---|
| ouvert | ouvert | ouvert | 0 (hors tension) |
| fermé | ouvert | ouvert | V_{A} |
| ouvert | fermé | ouvert | V_{B} |
| ouvert | ouvert | fermé | V_{C} |

de telle sorte qu'au maximum un seul des commutateurs 11,12 ou 13 est amené en position fermée en même temps, et qu'ainsi la tension d'alimentation (Valim) fournie par les moyens d'alimentation 7 corresponde à la tension d'alimentation (V_{A}, V_{B} ou V_{C}) de la seule cellule dont le commutateur correspondant est en position fermée.

Ainsi, les trois cellules électriques d'alimentation A, B et C constituent trois sources d'alimentation électrique 8, 9 et 10 indépendantes, fonctionnant à des moments différents et pouvant donc être remplacées / rechargées indépendamment les unes des autres.

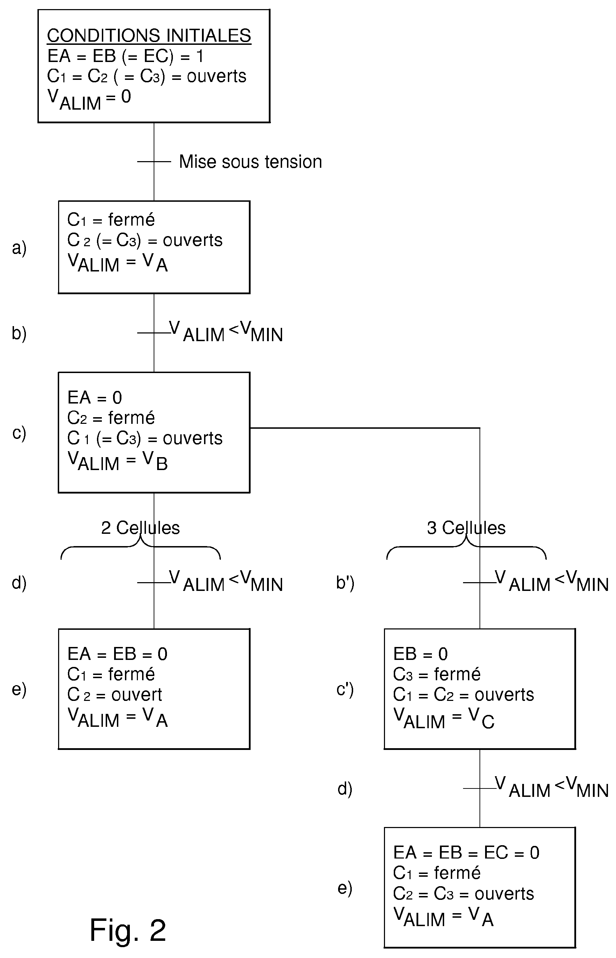

Selon les deux variantes sus-décrites, il est prévu des moyens de détection de l'état de charge des cellules d'alimentation, encore appelé moyens de détection d'une insuffisance d'alimentation, non représentés sur la figure 1, pour détecter lorsque la tension d'alimentation (Valim) fournie par les moyens d'alimentation 7 est inférieure à une tension minimum d'alimentation (Vmin) pour assurer un fonctionnement correct du dispositif de pointage 1. Ces moyens de détection de l'état de charge des cellules sont formés par exemple d'un comparateur recevant, à une entrée, la tension d'alimentation Valim correspondant à la tension aux bornes de la cellule (V_{A}, V_{B} ou V_{C}) utilisée comme source d'alimentation (8, 9 ou 10) lors de la comparaison et, à l'autre entrée, la tension minimum d'aliementation Vmin et, fournissant en sortie, un signal d'état de charge EA, EB ou EC de la cellule considérée. Ces moyens de détection de l'état de charge des cellules peuvent être incorporés au niveau des cellules elles-mêmes ou à titre d'alternative dans les moyens de commande de l'alimentation 14. Les moyens de commande de l'alimentation déterminent les valeurs des signaux de commande C1, C2 et C3 des commutateurs en fonction des signaux d'état de charge des cellules reçus. Un exemple de gestion de l'alimentation au moyen des signaux de commande des commutateurs sera donné avec la méthode de gestion de l'alimentation décrite en relation avec la figure 2.

La figure 2 représente une méthode de gestion de l'alimentation selon les deux variantes sus-présentées, i.e. avec deux ou trois cellules électriques d'alimentation, selon le premier mode de réalisation de l'invention.

Les conditions initiales, qui sont données à titre d'exemple, correspondent à des cellules chargées et en état de fonctionner (EA = EB = EC = 1). Le dispositif de pointage est hors tension, la tension d'alimentation est donc initialement nulle et les signaux C1, C2 et C3 commandent les commutateurs correspondants dans leur position ouverte.

La première condition, dépendant des conditions initiales choisies, est, dans ce cas, la mise sous tension du dispositif de pointage. Cette mise sous tension du dispositif de pointage correspond à une première étape (a) de la méthode de gestion de l'alimentation.

Cette première étape (a) consiste à activer un des deux ou des trois signaux C1, C2 ou C3 (suivant la variante considérée à deux ou trois cellules) pour fermer un des commutateurs 11, 12 ou 13. Par exemple, le signal de commande C1 commute le commutateur 11 dans sa position fermée. Le dispositif de pointage est alors alimenté par la source d'alimentation électrique 8, correspondant à la cellule A, qui alimente l'ensemble du dispositif de pointage avec une tension d'alimentation Valim = V_{A}.

Lors de la deuxième étape (b), les moyens de détection de l'état de charge des cellules contrôlent si cette tension d'alimentation Valim = V_{A} reste supérieure ou égale à une tension minimum d'alimentation Vmin assurant le fonctionnement du dispositif de pointage. On notera à cet effet, que cette tension minimum Vmin peut être choisie de manière à ce que le dispositif de pointage fonctionne plus ou moins bien en fin de vie de cellule.

Lorsque cette condition n'est plus assurée, i.e. Valim < V_{A}, la cellule A est alors dans un état de faible charge ne permettant d'alimenter suffisamment le dispositif de pointage. Lors de la troisième étape (c), l'état de charge (EA) de la cellule A est alors mis à 0, pour indiquer cet état de faible charge, et les moyens de commande de l'alimentation modifient les signaux C1, C2, C3 de manière à commuter sur une autre source d'alimentation 9 ou 10. Pour cela, le commutateur 11 précédemment en position fermée est remis dans sa position ouverte, et un autre commutateur 12 ou 13, par exemple le commutateur 12, via le signal C2, est commuté dans sa position fermée. Le dispositif de pointage est alors alimenté par la source d'alimentation électrique 9, correspondant à la cellule B, qui alimente alors l'ensemble du dispositif de pointage avec une tension d'alimentation Valim = V_{B}.

Si l'on considère la première variante avec seulement deux cellules d'alimentation A et B, la méthode de gestion d'alimentation comprend de préférence une quatrième étape (d) dans laquelle les moyens de détection de l'état de charge des cellules contrôlent si la tension d'alimentation Valim = V_{B} reste supérieure ou égale à la tension minimum d'alimentation Vmin.

Lorsque cette condition n'est plus assurée, i.e. Valim < V_{B}, la cellule B est alors dans un état de faible charge ne permettant plus d'alimenter suffisamment le dispositif de pointage. Il est alors avantageusement prévu une cinquième étape (e) dans laquelle l'état de charge EB de la cellule B est mis à 0 et les moyens de commande de l'alimentation modifient une nouvelle fois les signaux C1 et C2, de manière à commuter de nouveau sur la source d'alimentation 8 utilisée précédemment. Pour cela, le commutateur 12 précédemment en position fermée est remis dans sa position ouverte, et le commutateur 11 est commuté dans sa position fermée, via le signal de commande C1. Le dispositif de pointage est alors de nouveau alimenté par la source d'alimentation électrique 8, correspondant à la cellule A. Cette cinquième étape (e) a pour avantage de prolonger encore un peu la durée de fonctionnement du dispositif de pointage même lorsque toutes les cellules sont dans un état de faible charge (EA = EB = 0).

Si l'on considère la deuxième variante à trois cellules, il est prévu après la troisième étape (c) décrite précédemment, des étapes (b') et (c') similaires aux étapes (b) et (c). Ainsi, lors de l'étape (b'), l'état de faible charge de la deuxième source d'alimentation 9 utilisée est détectée, et lors de l'étape (c'), la troisième source d'alimentation 10 est alors utilisée en commutant le commutateur 13 en position fermée via le signal de commande C3.

De la même manière que pour la première variante, des étapes additionnelles (d) et (e) peuvent être prévues pour prolonger la durée de fonctionnement du dispositif de pointage. L'étape (d) consiste à détecter l'état de faible charge de la dernière source d'alimentation 10. Lors de l'étape (e), toutes les cellules étant dans un état de faible charge (EA = EB = EC = 0), les moyens de commande de l'alimentation commutent sur l'une des autres deux sources d'alimentation 8 ou 9 précédemment utilisées.

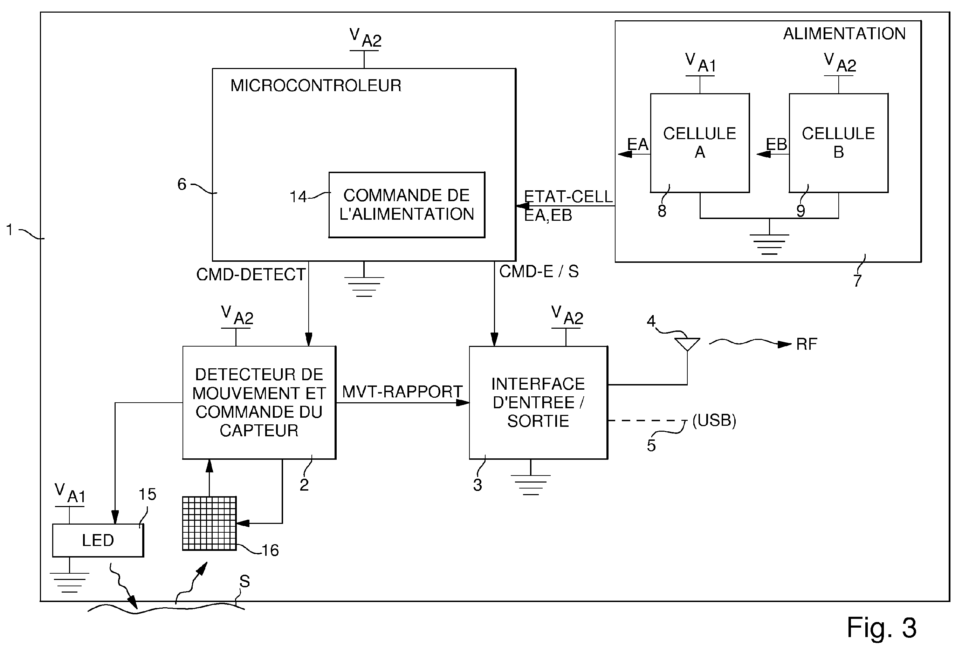

La figure 3 représente un dispositif électronique de pointage selon un deuxième mode de réalisation de l'invention. Les éléments communs avec le premier mode de réalisation sont désignés avec les mêmes références numériques. Leur description ne sera pas reprise en détail ici.

La différence majeure réside dans les moyens d'alimentation 7 qui comportent au moins deux sources d'alimentation 8 et 9 fonctionnant simultanément à la différence du premier mode de réalisation dans lequel les différentes sources d'alimentation sont commutés les unes après les autres de sorte qu'une seule source est utilisée en même temps. Cependant, dans ce deuxième de réalisation, les sources d'alimentation 8 et 9 fonctionnent également indépendamment l'une de l'autre, en ce sens que chacune alimente séparément des blocs fonctionnels distincts du dispositif de pointage. Ainsi, comme dans le premier mode de réalisation, il est possible de remplacer / recharger l'une des sources d'alimentation indépendamment de l'autre ou des autres sources d'alimentation du dispositif de pointage.

Selon une application spécifique à une souris optique sans fil, le dispositif de pointage comprend une source de lumière, par exemple une diode électroluminescente 15, pour éclairer une surface de support S du dispositif, et un photo-détecteur 16 contrôlé par le détecteur de mouvement 2 permettant récupérer une quantité de lumière réfléchie par la surface de support S. Une telle source de lumière 15 consomme une quantité importante d'énergie, une source d'alimentation 8 est donc prévue pour l'alimenter indépendamment des autres blocs fonctionnels du dispositif, comme le détecteur de mouvement 2, le photo-détecteur 16, l'interface d'entrée/sortie 3, le microcontrôleur 6, qui sont alimentés par une deuxième source d'alimentation 9.

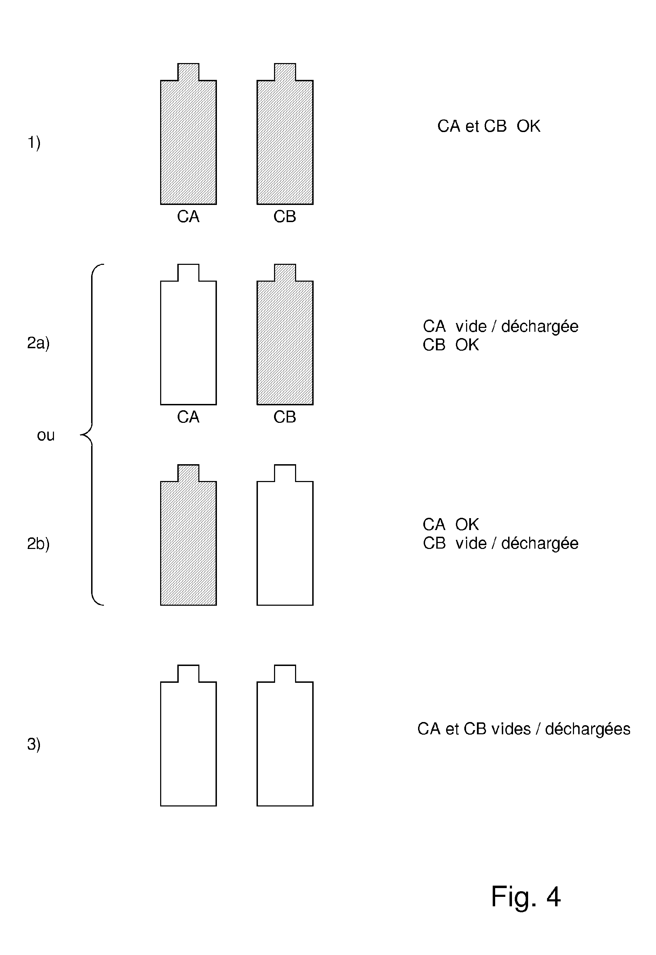

La figure 4 représente une illustration d'un exemple de moyens d'indication de l'état de charge des cellules d'alimentation selon l'un quelconque des deux modes de réalisation de l'invention pour un dispositif de pointage comprenant au moins deux cellules.

Il a été mis en évidence dans le cadre de la présente invention, l'importance de pouvoir indiquer à l'utilisateur lorsque l'une ou l'autre des cellules d'alimentation du dispositif de pointage était dans un état de faible charge, dénommé « vide » respectivement « déchargé » sur la figure 4, suivant que la cellule est non-rechargeable, respectivement rechargeable.

A cet effet, des moyens d'indication de l'état de charge des cellules d'alimentation sont prévus pour indiquer à l'utilisateur la ou les cellules d'alimentation dont l'état de charge est faible, i.e. dont la tension délivrée est inférieure à la tension minimum d'alimentation pour assurer le fonctionnement du dispositif de pointage. L'information concernant l'état de charge des différentes sources d'alimentation est fournie par les moyens de détection l'état de charge décrit précédemment.

Pour l'application à une souris, il est prévu selon une première variante d'incorporer les moyens d'indication de l'état de charge des cellules directement sur le dispositif de pointage, par exemple au moyen de deux diodes bicolores rouges (état de faible charge) et vertes (état de charge OK) visibles sur le boîtier de la souris, chacune des diodes correspondant à une cellules d'alimentation déterminée.

Cependant en vue de ne pas augmenter la consommation du dispositif de pointage lorsque les moyens d'alimentation sont quasiment déchargés, il est prévu avantageusement selon une deuxième variante de réalisation d'incorporer les moyens d'indication de l'état de charge des cellules à l'unité principale du système informatique comprenant la souris. Cette unité principale, i.e. un ordinateur, reçoit en plus des informations de mouvement (MVT_EMIS) que lui transmet le dispositif de pointage, des informations sur l'état de charge (EA, EB, EC) des différentes cellules d'alimentation du dispositif de pointage. Les moyens d'indication de l'état de charge des cellules est contrôlé par un pilote de gestion installé sur l'unité principale.

Les moyens d'indication de l'état de charge peuvent être représentés par exemple sous la forme d'un nombre de batteries correspondant au nombre de cellules d'alimentation du dispositif de pointage. Chacune des batteries représentées est accompagnée d'une inscription permettant à l'utilisateur de clairement établir la correspondance entre chaque batterie et la cellule d'alimentation correspondante du dispositif de pointage. Ainsi, l'utilisateur peut changer facilement l'une des cellules indépendamment des autres, les cellules étant indépendantes les unes des autres. Il est bien évident que toutes autres représentations des cellules susceptibles de fournir les mêmes indications à l'utilisateur sont envisageables.

L'indication d'un état de charge suffisant pour assurer un fonctionnement correct peut être représenté en noircissant la batterie, ou en la colorant en vert. L'indication d'un état de faible charge, i.e. insuffisant pour assurer un fonctionnement correct, peut être représenté en laissant blanc la batterie, ou en la colorant en rouge. D'autres indications peuvent être utilisées, notamment il est possible de prévoir des indications pour des niveaux de charge intermédiaires permettant de renseigner plus finement l'utilisateur qui pourra ainsi anticiper le remplacement ou le rechargement d'une des cellules.

Dans l'exemple représenté à la figure 4, les moyens d'indication de l'état de charge indique, à l'étape 1, que les deux cellules A et B sont dans un état de charge suffisant (A et B : OK) pour fonctionner chacune correctement.

Suivant l'utilisation qui est faite de l'une ou l'autre des cellules d'alimentation A et B, les moyens d'indication de l'état de charge indique, soit (étape 2a) que la cellule A est dans un état de faible charge (A : vide / déchargée), insuffisant pour fonctionner correctement et que la cellule B est reste fonctionnelle (B : OK), soit inversement (étape 2b) que la cellule B est dans un état de faible charge (B : vide / déchargée) et que la cellule reste fonctionnelle (A : OK).

Enfin, si l'utilisateur n'a pas remplacé ou rechargé la cellule dans un état de faible charge et qu'il continue à utiliser le dispositif de pointage, les moyens d'indication de l'état de charge indique lors de l'étape 3 que les deux cellules A et B sont dans un état de faible charge (A et B : vides / déchargées), l'utilisateur devant alors rapidement procéder au remplacement ou rechargement d'au moins une des deux cellules pour pouvoir continuer à utiliser le dispositif de pointage.

La méthode d'indication de l'état de charge des cellules d'alimentation d'un tel dispositif électronique de pointage consiste simplement à détecter l'état de fonctionnement de chacune des cellules d'alimentation et à indiquer à l'utilisateur la ou les cellules d'alimentation à remplacer / recharger.

On comprendra que diverses modifications et / ou améliorations évidentes pour l'homme du métier peuvent être apportées aux différentes modes de réalisation de l'invention décrits dans la présente description sans sortir du cadre de l'invention défini par les revendications annexées.

## Revendications

1. Dispositif électronique de pointage (1) comprenant des moyens de détection de mouvement (2), des moyens de transmission du mouvement (4, 5) détecté à destination d'une unité externe et des moyens d'alimentation électrique (7) pour alimenter les moyens de détection de mouvement et les moyens de transmission, **caractérisé en ce que** les moyens d'alimentation électrique comprennent au moins deux cellules électriques d'alimentation (A, B, C) constituant autant de sources d'alimentation électrique (8, 9,10) indépendantes pouvant être remplacées / rechargées indépendamment les unes des autres.

2. Dispositif électronique de pointage selon la revendication 2, **caractérisé en ce qu'**il comprend des moyens de détection de l'état de charge (EA, EB, EC) des cellules et des moyens de commutation (11,12,13) pour sélectionner une seule des sources d'alimentation en même temps, la source sélectionnée étant destinée à alimenter le dispositif de pointage.

3. Dispositif électronique de pointage selon la revendication 1, **caractérisé en ce qu'**au moins une première, respectivement une deuxième source d'alimentation alimentent, indépendamment l'une de l'autre, au moins un premier (15), respectivement au moins un deuxième (16) bloc fonctionnel du dispositif de pointage.

4. Dispositif électronique de pointage selon la revendication 3, comprenant une source de lumière (15) destinée à éclairer une surface de support (S) du dispositif, les moyens de détection du mouvement comprenant un photo-détecteur (16) permettant de détecter la quantité de lumière réfléchie par la surface de support, **caractérisé en ce que** le premier bloc fonctionnel alimenté par une première source d'alimentation comprend la source de lumière et **en ce que** le deuxième bloc fonctionnel alimenté par une deuxième source d'alimentation comprend le photo-détecteur.

5. Dispositif électronique de pointage selon l'une des revendications 2 à 4, **caractérisé en ce qu'**il comprend des moyens d'indication de l'état de charge des cellules d'alimentation pour indiquer à l'utilisateur la ou les cellules d'alimentation à remplacer / recharger.

6. Souris sans fil pour ordinateur **caractérisée en ce qu'**elle comprend un dispositif de pointage selon l'une des revendications 1 à 5, dans lequel les moyens de transmission sont des moyens de transmission sans fil.

7. Système informatique comprenant une souris munie d'un dispositif électronique de pointage selon l'une des revendications 2 à 4, une unité principale recevant des informations de mouvement (MVT-EMIS) transmises par le dispositif de pointage, **caractérisé en ce que** l'unité principale reçoit en outre des informations de l'état de charge des différentes cellules (EA, EB, EC) et comprend des moyens d'indication de l'état de charge des cellules d'alimentation pour indiquer à l'utilisateur la ou les cellules d'alimentation à remplacer / recharger, lesdits moyens d'indication de l'état de charge des cellules d'alimentation étant contrôlé par un pilote de gestion installé sur l'unité principale.

8. Méthode de gestion de l'alimentation d'un dispositif électronique de pointage selon la revendication 2, **caractérisée en ce qu'**elle comprend les étapes suivantes :
a. alimenter le dispositif de stockage à l'aide d'une des sources d'alimentation ;
b. détecter l'état de charge de la cellule d'alimentation utilisée ;
c. sélectionner une autre cellule d'alimentation pour alimenter le dispositif de pointage après détection d'un état de faible charge de la cellule précédemment utilisée.

9. Méthode de gestion selon la revendication 8, **caractérisée en ce qu'**elle comprend également les étapes suivantes :
d. détecter un état de faible charge de toutes les cellules d'alimentation ;
e. sélectionner de nouveau l'une des cellules d'alimentation précédemment utilisées, autre que la dernière cellule utilisée.

10. Méthode d'indication de l'état de charge des cellules d'alimentation d'un dispositif électronique de pointage selon la revendication 5 ou 7, **caractérisé en ce qu'**elle comprend les étapes suivantes :
a. détecter l'état de charge de chacune des cellules d'alimentation ;
b. indiquer à l'utilisateur la ou les cellules d'alimentation à remplacer / recharger.
